# FASCICULE DE BREVET EUROPEEN

(11) **EP 0 654 871 B1**
(45) Date de publication et mention de la délivrance du brevet: **08.07.1998**
(21) Numéro de dépôt: 94420321.5
(22) Date de dépôt: 17.11.1994
(51) Int. Cl.: H01R 43/24

(54) **Procédé pour réaliser un connecteur électrique femelle et connecteur électrique femelle ainsi réalisé**
Verfahren zur Herstellung einer elektrischen Kupplungsdose und damit realisierte Kupplungsdose
Process for making an electrical female connector and electrical female connector made in this way

(30) Priorité: 18.11.1993 FR 9314028
(43) Date de publication de la demande: 24.05.1995
(73) Titulaire: COMPAGNIE FRANCAISE DE CABLAGE, 78190 Montigny Le Bretonneux (FR)
(72) Inventeur: Scrabalat, Philippe, F-38180 Seyssins (FR)
(74) Mandataire: Faber, Jean-Paul

(56) Documents cités:
- DE-A- 3 127 215
- DE-A- 3 139 207
- US-A- 4 863 402

## Description

L'invention concerne un procédé pour réaliser un connecteur électrique femelle, plus particulièrement destiné à permettre la connection avec un connecteur mâle constitué par une fiche plate. Elle concerne également le connecteur femelle réalisé selon ce procédé.

A ce jour, il n'existe pas de solution économiquement raisonnable et industrialisable satisfaisante pour la réalisation de connecteurs femelles. En effet, pour la réalisation de tels connecteurs, on est obligé d'assembler un clip de forme voulue à un connecteur, cet assemblage s'effectuant par encliquetage du clip dans le connecteur, induisant outre la réalisation de pièces supplémentaires, une étape supplémentaire d'encliquetage qui augmente les coûts de production.

Le surmoulage des connecteurs mâles est tout à fait envisageable, en revanche, celui-ci devient plus délicat pour les connecteurs femelles, attendu que dans ce cas, ce surmoulage induit l'introduction de matière plastique à l'intérieur du volume défini par la partie fonctionnelle et conductrice de l'électricité de la connection.

On a décrit, par exemple dans le document DE-A-3 127 215, un connecteur électrique femelle partiellement surmoulé, dans lequel le surmoulage s'effectue après comblement partiel du volume défini par la partie fonctionnelle du connecteur - conductrice de l'électricité, par une calle en un matériau neutre. La forme de ladite partie fonctionnelle lui est conférée par construction préalablement à l'étape de surmoulage. De la sorte, elle ne peut développer de réelles propriétés d'élasticité, susceptibles de lui permettre de s'adapter au connecteur mâle de manière satisfaisante pour optimiser le contact électrique.

L'objet de l'invention est de proposer un procédé permettant le surmoulage de ces connecteurs femelles, tout en leur permettant de développer des propriétés d'élasticité.

Ce procédé pour la réalisation des connecteurs électriques femelles comportant une partie fonctionnelle conductrice de l'électricité, et notamment des lames métalliques, définissant un volume interne destiné à recevoir une connexion mâle, consistant à surmouler ladite partie conductrice après avoir au moins partiellement comblé ledit volume interne, se caractérise en ce que la forme fonctionnelle desdites lames métalliques leur est conférée par le biais d'un moule lors du surmoulage de ladite partie conductrice.

En d'autres termes, l'invention consiste à procéder à un surmoulage proprement dit de la partie métallique conductrice de l'électricité, postérieurement au comblement, à tout le moins partiel, du volume défini par cette connexion femelle.

Selon une caractéristique avantageuse de l'invention, ce surmoulage s'effectue au moyen d'un moule en trois parties, respectivement un noyau destiné à venir combler partiellement le volume défini par ladite partie conductrice, et de deux empreintes, respectivement inférieure et supérieure, de forme sensiblement complémentaire à celle du noyau, et venant coopérer avec celui-ci au contact de ladite partie conductrice lors de la phase d'injection de matière plastique.

Selon une forme avantageuse de l'invention plus particulièrement destinée à la réalisation de connecteur femelle pour fiche plate, le noyau comporte deux faces principales munies de deux concavités, au niveau desquelles sont destinées à venir se mettre en place les deux lames de la partie métallique conductrice de l'électricité définissant le volume interne et, les deux empreintes, respectivement inférieure et supérieure sont bombées, le rayon de courbure desdites parties bombées correspondant sensiblement au rayon de courbure des concavités du noyau. De fait, cette mise en oeuvre particulière permet de déformer les deux lames conductrices de l'électricité lors de la fermeture du moule, de telle sorte à obtenir la forme fonctionnelle de la connexion ainsi réalisé, tout en garantissant l'absence de matière plastique sur cette partie fonctionnelle.

L'invention concerne également les connecteurs femelles obtenus selon ce procédé. Ces connecteurs se caractérisent en ce que les deux lames métalliques sont dans leurs parties incurvées au contact l'une de l'autre de manière élastique.

Selon une caractéristique avantageuse de l'invention, les zones desdits connecteurs dépourvus de matière plastique sont munies de joints d'étanchéité, qui n'affectent pas l'élasticité desdites lames.

La manière dont l'invention peut être réalisée et les avantages qui en découlent ressortiront mieux de l'exemple de réalisation qui suit donné à titre indicatif et non limitatif à l'appui des figures annexées.

La figure 1 est une représentation schématique en perspective de la partie conductrice de l'électricité du connecteur conforme à l'invention.

La figure 2 est une représentation schématique en coupe du moule utilisé pour la mise en oeuvre de l'invention.

La figure 3 est une représentation schématique en perspective du noyau du moule de la figure 2.

La figure 4 est une vue schématique en section du connecteur femelle obtenu après surmoulage, dont la figure 5 est une vue de face.

La figure 6 est une représentation schématique en perspective d'un connecteur multiple, obtenu selon le procédé de l'invention.

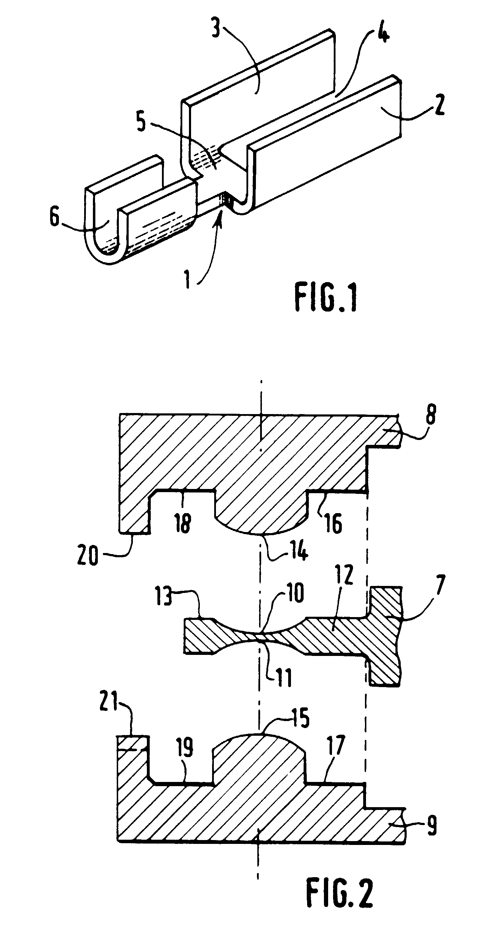

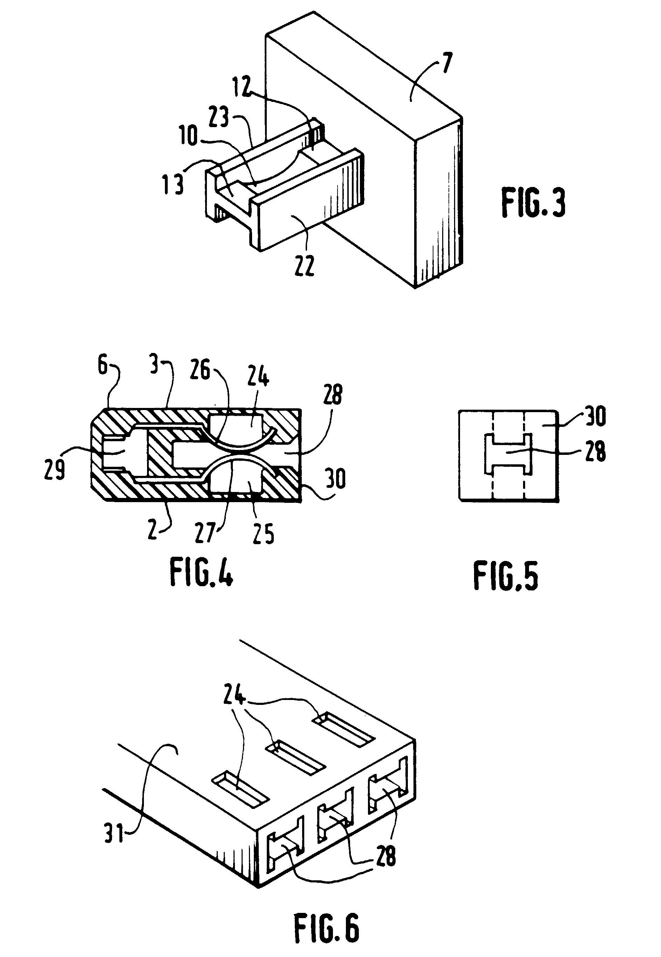

On a représenté sur la figure 1 la partie conductrice de l'électricité (1) d'un connecteur femelle, plus spécialement destiné à recevoir une fiche mâle plate.

De manière connue, une telle partie femelle est constituée de deux lames parallèles (2) et (3), définissant entre elles une fente (4) et reliées à leur base (5), pour pouvoir ensuite être serties en leur zone terminale (6) sur un fil de conduction électrique, destiné à acheminer le courant électrique en un lieu déterminé.

Selon l'invention, le procédé de surmoulage de matière plastique injectée sur cette partie conductrice s'effectue au moyen d'un moule du type de celui représenté schématiquement sur la figure 2.

Ce moule est constitué de trois parties respectivement un noyau central (7), et deux empreintes respectivement supérieure (8) et inférieure (9).

Ainsi qu'on peut l'observer sur cette figure 2, le noyau (7) comporte tout d'abord une zone sensiblement linéaire (12), qui se prolonge ensuite par deux concavités respectivement supérieure (10) et inférieure (11), qui se prolongent à leur tour par une nouvelle portion linéaire (13).

Ce noyau central (7) est destiné à coopérer avec des empreintes respectivement supérieure (8) et inférieure (9), une fois la partie conductrice (1) en place au niveau de celui-ci, ainsi que cela est représenté en traits mixtes sur la figure 2.

Ainsi, les parties bombées (14) et (15), dont le rayon de courbure est sensiblement identique au rayon de courbure des zones concaves (10) et (11) du noyau central (7), viennent coopérer respectivement les unes avec les autres et imprimer aux lames métalliques (2) et (3) une courbure de même rayon, conférant aux dites lames (2, 3) leur forme fonctionnelle définitive. Corollairement s'effectue l'injection de matière plastique qui va ainsi conserver auxdites lames (2) et (3) leur forme incurvée, telle qu'on peut l'observer sur la figure 4.

Parallèlement et compte tenu des zones d'occupation et de comblement du volume défini par la partie métallique (1) de par le noyau (7), il y a également injection de matière plastique bien sûr autour de cette partie (1), mais également à l'intérieur du volume défini dans lequel le noyau n'occupe pas de place.

Ainsi qu'on peut l'observer, la quasi-totalité de la connexion située à l'aplomb (24,25) des zones de courbure (26,27) des lames (2,3) est exempte de matière plastique et ce, dans le but de conserver l'élasticité auxdites lames métalliques à ce niveau, afin que celles-ci, tel qu'on peut l'observer sur la figure 4, conservent leur forme fonctionnelle, c'est à dire restent certes au contact l'une de l'autre mais puissent s'écarter l'une par rapport à l'autre, pour permettre l'introduction d'une fiche plate (mâle). L'élasticité des lames permet en outre de maintenir par pincement ladite fiche plate au sein de la conexion femelle.

Bien entendu, dans la mesure où la mise en place de la partie conductrice de l'électricité (1) s'effectue après sertissage du fil métallique au niveau de la partie (6), le plan de joint (20, 21) définit une ouverture (non représentée) permettant le passage du fil.

Il se crée lors de l'injection une zone (28), exempte de matière plastique, située en amont des deux zones recourbées (26) et (27) des lames (2) et (3), servant d'accès pour la fiche plate à la partie conductrice (1) de la connexion femelle, et sa progression au niveau desdites parties courbes (26) et (27) des lames métalliques (2) et (3).

Bien entendu, selon l'invention, on peut réaliser au sein d'une même entité plusieurs connecteurs, tel que représentés par exemple sur la figure 6. Ceux-ci sont notamment adaptés à la réalisation de microrupteurs, nécessitant plusieurs contacteurs ou connecteurs simultanés au sein d'une même broche.

Selon l'invention, les orifices ou zones (24) et (25) situés à l'aplomb des zones recourbées (26,27) des lames (2,3), peuvent être comblés par des joints d'étanchéité, notamment vis à vis de l'eau, sans pour autant altérer l'élasticité des lames (26) et (27) et partant leur effet de contact avec la fiche mâle avec laquelle elles sont susceptibles de coopérer.

Ces connecteurs présentent de nombreux avantages par rapport aux connecteurs femelles disponibles à ce jour.

On peut notamment souligner la réduction des coûts de fabrication et en outre, la diminution de quantité de matière compte-tenu du procédé utilisé. Cette diminution de quantité de matière se répercute également au niveau de la diminution des coûts de fabrication et de production. On peut également mentionner la facilité de mise en oeuvre de ce procédé de fabrication, permettant d'obtenir des cadences de production particulièrement performantes.

L'invention présente donc de nombreuses applications, toutes reliées à la connectique.

## Revendications

1. Procédé pour la réalisation des connecteurs électriques femelles comportant une partie fonctionnelle conductrice de l'électricité (1), et notamment des lames métalliques (2, 3), définissant un volume interne destiné à recevoir une connexion mâle, ladite partie conductrice (1) étant surmoulée après comblement au moins partiel dudit volume interne, ***caractérisé*** en ce que la forme fonctionnelle desdites lames métalliques (2, 3) leur est conférée par le biais d'un moule lors du surmoulage de ladite partie conductrice.

2. Procédé pour la réalisation des connecteurs électriques femelles selon la revendication 1, ***caractérisé*** en ce que le surmoulage s'effectue au moyen d'un moule en trois parties, respectivement un noyau (7), destiné à venir combler partiellement le volume défini par ladite partie conductrice de l'électricité (1), et de deux empreintes, respectivement inférieure (9) et supérieure (8), de forme sensiblement complémentaire à celle du noyau (7), et venant coopérer avec celui-ci au contact de ladite partie conductrice (1) lors de la phase d'injection de matière plastique.

3. Procédé pour la réalisation des connecteurs électriques femelles selon la revendication 2, ***caractérisé*** en ce que le noyau (7) comporte deux faces principales munies de deux concavités (10,11), au niveau desquelles sont destinées à venir se mettre en place les deux lames métalliques (2, 3) constitutives de la partie métallique conductrice de l'électricité (1) définissant le volume interne, et en ce que les deux empreintes, respectivement inférieure (9) et supérieure (8) sont bombées (14,15), le rayon de courbure desdites parties bombées correspondant sensiblement au rayon de courbure des concavités du noyau (7), de telle sorte à ce qu'elles puissent coopérer étroitement avec ce dernier une fois les lames métalliques (2, 3) en place pour conférer à ces dernières leur forme fonctionnelle.

4. Connecteur électrique femelle monté à l'extrémité d'un fil de conduction et destiné à recevoir une connexion mâle, et du type comportant deux lames métalliques en regard (2, 3), incurvées (26, 27), lesdites lames (2, 3) étant reliées à leur base (5) au niveau d'une zone de sertissage (6) du fil électrique de conduction, l'ensemble conducteur ainsi constitué étant surmoulé partiellement par de la matière plastique, tout en conservant l'élasticité de déformation desdites lames, constitutives de la partie électriquement conductrice, les zones (24, 25) situées à l'aplomb des portions incurvées (26, 27) des lames métalliques (2, 3) étant exemptes de matière plastique, ledit connecteur étant caractérisé en ce que les deux lames métalliques (2, 3) sont dans leurs parties incurvées (26, 27) au contact l'une de l'autre de manière élastique.

5. Connecteur électrique femelle selon la revendication 4, ***caractérisé*** en ce que les zones (24,25) situées à l'aplomb des portions recourbées (26,27) des lames métalliques (2,3) reçoivent un joint d'étanchéité, n'affectant pas l'élasticité desdites lames.

## Patentansprüche

1. Verfahren zur Herstellung buchsenartiger elektrischer Verbinder mit einem Elektrizität leitenden funktionellen Teil (1), insbesondere mit metallischen Lamellen (2, 3), der ein inneres Volumen definiert, das zur Aufnahme eines Verbindungssteckers bestimmt ist, wobei der genannte leitende Teil (1) nach zumindest teilweisem Ausfüllen des genannten inneren Volumens umgossen wird, dadurch gekennzeichnet, daß den genannten metallischen Lamellen (2, 3) ihre funktionelle Form durch die Formfläche einer Form während des Umgießens des genannten leitenden Teiles vermittelt wird.

2. Verfahren zur Herstellung buchsenartiger elektrischer Verbinder nach Anspruch 1, dadurch gekennzeichnet, daß das Umgießen vermittels einer Form mit drei Teilen durchgeführt wird, einem Kern (7), der zum partiellen Ausfüllen des Volumens bestimmt ist, das durch den genannten, Elektrizität leitenden Teil (1) definiert ist, und zwei Matrizen, einer unteren Matrize (9) und einer oberen Matrize (8), deren Form zu derjenigen des Kernes (7) im wesentlichen komplementär ist und die mit diesem unter Berührung des genannten leitenden Teiles (1) während der Einspritzphase des Kunststoffmaterials zusammenwirken.

3. Verfahren zur Herstellung buchsenartiger elektrischer Verbinder nach Anspruch 2, dadurch gekennzeichnet, daß der Kern (7) zwei Hauptflächen besitzt, die mit zwei konkaven Flächen (10, 11) versehen sind, auf deren Höhe die zwei metallischen Lamellen (2, 3) in Stellung zu bringen sind, die den elektrisch leitenden, metallischen Teil (1) bilden und das innere Volumen definieren, und daß die zwei Matrizen, die untere Matrize (9) und die obere Matrize (8), mit Auswölbungen (14, 15) versehen sind, wobei der Krümmungsradius der Auswölbungen im wesentlichen dem Krüm mungsradius der Konkavflächen des Kernes (7) entspricht, so daß sie mit letzterem eng zusammenwirken können, nachdem die metallischen Lamellen (2, 3) einmal in Stellung sind, um letzteren ihre funktionelle Form zu vermitteln.

4. Buchsenartiger elektrischer Verbinder, der am Ende eines Leiterdrahtes angebracht und zur Aufnahme eines Verbindungssteckers bestimmt ist, und mit zwei gegenüberliegenden, metallischen Lamellen (2, 3), die gewölbt (26, 27) sind, wobei die genannten Lamellen (2, 3) an ihrer Basis (5) auf Höhe einer Zone (6) zum Festklemmen des elektrischen Leiterdrahtes verbunden sind, die so gebildete Leitereinheit teilweise durch Kunststoffmaterial umgossen ist, wobei die Elastizität der Verformung der genannten Lamellen erhalten bleibt, die den elektrisch leitenden Teil bilden, die Zonen (24, 25), die senkrecht zu den gewölbten Teilen (26, 27) der metallischen Lamellen (2, 3) gelegen sind, von Kunststoffmaterial freigehalten sind und der genannte Verbinder dadurch gekennzeichnet ist, daß die zwei metallischen Lamellen (2, 3) an ihren gewölbten Zonen (26, 27) miteinander in elastischer Weise in Berührung sind.

5. Buchsenartiger elektrischer Verbinder nach Anspruch 4, dadurch gekennzeichnet, daß die Zonen (24, 25), die senkrecht zu den gewölbten Teilen (26, 27) der metallischen Lamellen (2, 3) gelegen sind, eine Dichtung aufnehmen, die die Elastizität der genannten Lamellen nicht beeinträchtigt.

## Claims

1. A method for the production of electrical female connectors comprising a functional current conductor part (1) and in particular metal blades (2, 3) defining an interior volume intended to receive a male connection, the said current conductor part (1) being encapsulated after the at least partial filling of the said interior volume,
**characterised in that** the functional shape of the said metal blades (2, 3) is conferred on them by the slope of a mould during the encapsulation of the said current conductor part.

2. A method for the production of electrical female connectors according to Claim 1,
**characterised in that** the encapsulation is performed by means of a mould consisting of three parts, respectively a core (7), intended to come to partially fill the volume defined by the said current conductor part (1), and two mould impressions, respectively a lower one (9) and an upper one (8), having a shape substantially complementary to that of the core (7), and coming to cooperate therewith on contact with the said conductive part (1) during the phase for the injection of plastics material.

3. A method for the production of the electrical female connectors according to Claim 2,
**characterised in that** the core (7) comprises two main faces provided with two concavities (10, 11), at the level of which the two metal blades (2, 3), which are component parts of the metal current conductor part (1), defining the interior volume are intended to come to be positioned, **and in that** the two mould impressions, a lower one (9) and an upper one (8) respectively, are domed (14, 15), the radius of curvature of the said domed portions roughly corresponding to the radius of curvature of the concavities of the core (7), in such a manner that they may cooperate closely with the latter once the metal blades (2, 3) are in position to confer to the latter their functional shape.

4. An electrical female connector mounted at the end of a current conductor wire and intended to receive a male connection, and of the type comprising two inwardly curved (26, 27) opposite metal blades (2, 3), the said blades (2, 3) being connected to their base (5) at the level of a zone (6) for crimping the current conductor wire, the conductor unit thus formed being partially encapsulated by the plastics material, whilst conserving the deformation elasticity of the said blades, which are component parts of the current conductor part, the zones (24, 25) situated perpendicular to the inwardly curved portions (26, 27) of the metal blades (2, 3) being devoid of plastics material, the said connector being **characterised in that** the two metal blades (2, 3) are in their inwardly curved parts (26, 27) in contact with one another in an elastic manner.

5. An electrical female connector according to Claim 4, **characterised in that** the zones (24, 25) situated perpendicular to the curved portions (26, 27) of the metal blades (2, 3) receive a seal, which does not affect the elasticity of the said blades.
